# DEMANDE DE BREVET EUROPEEN

(11) **EP 4 067 061 A1**
(43) Date de publication de la demande: **05.10.2022**
(21) Numéro de dépôt: 22165916.2
(22) Date de dépôt: 31.03.2022
(51) Int. Cl.: B32B 5/02, B32B 7/12, B32B 7/14, B32B 15/08, B32B 15/085, B32B 15/20, B32B 17/04, B32B 27/28, B32B 27/32, B32B 27/34

(54) **ÉCRAN AVEC UN HAUT DEGRÉ D'INCOMBUSTIBILITÉ**

(30) Priorité: 01.04.2021 FR 2103390
(71) Demandeur: Winco Technologies, 22440 Ploufragan (FR)
(72) Inventeur: LEUCK, Hervé, 22440 PLOUFRAGAN (FR); FAUBRY, Eric, 22440 PLOUFRAGAN (FR)
(74) Mandataire: Cabinet Le Guen Maillet

(57) **Abrégé**

L'invention concerne un écran (100) comportant une couche d'aluminium (102) réalisée par une feuille d'aluminium percée de microperforations (104), une première couche (106) réalisée en un matériau respirant et imperméable et où la première couche (106) est collée à la couche d'aluminium (102), et une deuxième couche (108) réalisée en un matériau de protection et où la deuxième couche (108) est collée à la première couche (106), et où la surface des microperforations (104) est de 1,03 mm² ± 25% par cm² d'aluminium.

## Description

### DOMAINE TECHNIQUE

La présente invention concerne un écran, par exemple un écran de sous-toiture ou un écran pare-pluie, qui présente un haut degré d'incombustibilité, qui est imperméable et qui est respirant.

### ÉTAT DE LA TECHNIQUE ANTÉRIEURE

Il existe de nombreux types d'écrans mais aucun ne donne entière satisfaction notamment en ce qui concerne l'incombustibilité.

Il est donc nécessaire de trouver un écran qui présente un haut degré d'incombustibilité tout en étant imperméable à l'eau et respirant à la vapeur d'eau.

### EXPOSÉ DE L'INVENTION

Un objet de la présente invention est de proposer un écran qui présente une feuille d'aluminium qui fait obstacle à la propagation d'une flamme en limitant l'apport d'oxygène en cas de combustion.

À cet effet, est proposé un écran comportant :
- une couche d'aluminium réalisée par une feuille d'aluminium percée de microperforations,
- une première couche réalisée en un matériau respirant et imperméable et où la première couche est collée à la couche d'aluminium, et
- une deuxième couche réalisée en un matériau de protection et où la deuxième couche est collée à la première couche et,
où la surface des microperforations est de 1,03 mm² ± 25% par cm² d'aluminium.

Un tel écran présente un haut degré d'incombustibilité tout en étant imperméable à l'eau et respirant à la vapeur d'eau.

Selon un mode de réalisation particulier, le collage entre les différentes couches est réalisé par un collage par points.

Selon un mode de réalisation particulier, le collage entre les différentes couches est réalisé par la mise en place d'une nappe non tissée thermoplastique adhésive.

Selon un mode de réalisation particulier, le collage entre les différentes couches est réalisé par la mise en place d'un film perforé thermoplastique adhésif.

Avantageusement, la densité de colle entre la couche d'aluminium et la première couche est inférieure à 20g/m² et supérieure à 3g/m².

Avantageusement, la densité de colle entre la première couche et la deuxième couche est inférieure à 20g/m² et supérieure à 3g/m².

Avantageusement, la densité de la première couche est inférieure à 40g/m² et supérieure à 5g/m².

Avantageusement, l'écran comporte une couche de renfort collée sur la couche d'aluminium et la densité de la couche de renfort est comprise entre 10g/m² et 160g/m².

Avantageusement, la deuxième couche est constituée d'un tissu de verre ou d'une grille de verre, et sa densité est comprise entre 150g/m² et 430g/m².

Avantageusement, la colle contient un produit retardateur de flamme.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec le dessin joint :

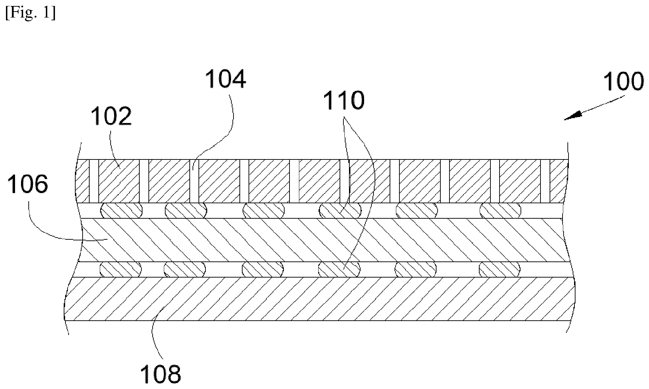

Fig. 1 représente une vue en coupe d'un écran selon l'invention.

### EXPOSÉ DÉTAILLÉ DE MODES DE RÉALISATION

La Fig. 1 représente un écran 100 tel qu'un écran de sous-toiture ou un écran pare-pluie.

L'écran 100 comporte :
- une couche d'aluminium 102 réalisée par une feuille d'aluminium percée de microperforations 104,
- une première couche 106 réalisée en un matériau respirant et imperméable et où la première couche 106 est collée à la couche d'aluminium 102, et
- une deuxième couche 108 réalisée en un matériau de protection et où la deuxième couche 108 est collée à la première couche 106.

L'épaisseur de la couche d'aluminium 102 est comprise entre 10 µm et 50 µm.

La couche d'aluminium 102 forme une barrière de réflexion thermique et la surface des microperforations 104 est de 1,03 mm² ± 25% par cm² d'aluminium. Selon un mode de réalisation particulier, il y a 84 microperforations 104 de 125 µm de diamètre par cm² d'aluminium. Bien sûr, il est possible d'avoir des microperforations 104 de densité et de diamètre différents tant que la surface percée correspondant à 1,03 mm² ± 25% par cm² d'aluminium est respectée. Le diamètre des perforations doit se situer dans un intervalle compris entre 60 µm et 1000 µm.

Une telle surface de perforation limite le passage de l'oxygène et en cas de combustion, la flamme n'est donc pas entretenue et une telle surface autorise quand même le passage de la vapeur d'eau et donc la respirabilité de l'ensemble. En effet, la résistance à la diffusion de la vapeur d'eau est inférieure à 0,1 m.

Dans le cas où un renforcement structurel de la couche d'aluminium 102 est nécessaire, il est possible de coller une couche de renfort comme un tissu de verre ou une grille de verre sur la couche d'aluminium 102 et positionnée entre la couche d'aluminium 102 et la première couche 106. Dans ce cas, la densité de la couche de renfort est comprise entre 10g/m² et 160g/m².

La première couche 106 est un polymère ou copolymère thermoplastique respirant à la vapeur d'eau et étanche à l'eau, tel que des produits thermoplastiques de type élastomère (TPE) comme le produit référencé sous la dénomination PEBAX^{®} de la société ARKEMA^{®} ou tel que des membranes microcristallines PE ou PP.

La densité de la première couche 106 est inférieure à 40g/m² et supérieure à 5g/m².

La deuxième couche 108 assure la résistance mécanique de l'écran 100 et elle est constituée par exemple d'un tissu de verre ou d'une grille de verre, et sa densité est comprise entre 150g/m² et 430g/m².

Selon un premier mode de réalisation, le collage entre les différentes couches 102, 106 et 108 et éventuellement la couche de renfort est réalisé par un collage par points 110 qui assure une bonne respirabilité.

Selon un deuxième mode de réalisation, le collage entre les différentes couches 102, 106 et 108 et éventuellement la couche de renfort est réalisé par la mise en place d'une nappe non tissée thermoplastique adhésive.

Selon un troisième mode de réalisation, le collage entre les différentes couches 102, 106 et 108 et éventuellement la couche de renfort est réalisé par la mise en place d'un film perforé thermoplastique adhésif.

Selon une variante, le film thermoplastique adhésif assurant le collage entre la couche d'aluminium 102 et la couche de renfort, ainsi que la couche d'aluminium 102 ne sont pas perforées avant d'être collées et après collage elles subissent un perçage qui réalise les microperforations 104 dans la couche d'aluminium 102 et la couche de renfort.

Dans chacun des trois modes de réalisation du collage, la densité de colle entre la couche d'aluminium 102 et la première couche 106 est inférieure à 20g/m² et supérieure à 3g/m².

Dans chacun des trois modes de réalisation du collage, la densité de colle entre la première couche 106 et la deuxième couche 108 est inférieure à 20g/m² et supérieure à 3g/m².

Pour améliorer la résistance à la combustion, la colle contient un produit retardateur de flamme, tel que de l'antimoine ou du bromure.

Dans la réalisation de l'écran 100 il est possible de coller la couche d'aluminium 102 et la première couche 106, puis l'ensemble sur la deuxième couche 108, mais il est également possible de coller la première couche 106 et la deuxième couche 108, puis l'ensemble sur la couche d'aluminium 102.

Dans le cas où la couche de renfort est présente, elle est collée à la couche d'aluminium 102 préalablement à tout autre collage.

## Revendications

1. Écran (100) comportant :
- une couche d'aluminium (102) réalisée par une feuille d'aluminium percée de microperforations (104),
- une première couche (106) réalisée en un matériau respirant et imperméable et où la première couche (106) est collée à la couche d'aluminium (102), et
- une deuxième couche (108) réalisée en un matériau de protection et où la deuxième couche (108) est collée à la première couche (106), et
où la surface des microperforations (104) est de 1,03 mm² ± 25% par cm² d'aluminium.

2. Écran (100) selon la revendication 1, **caractérisé en ce que** le collage entre les différentes couches (102, 106, 108) est réalisé par un collage par points (110).

3. Écran (100) selon la revendication 1, **caractérisé en ce que** le collage entre les différentes couches (102, 106, 108) est réalisé par la mise en place d'une nappe non tissée thermoplastique adhésive.

4. Écran (100) selon la revendication 1, **caractérisé en ce que** le collage entre les différentes couches (102, 106, 108) est réalisé par la mise en place d'un film perforé thermoplastique adhésif.

5. Écran (100) selon l'une des revendications 1 à 4, **caractérisé en ce que** la densité de colle entre la couche d'aluminium (102) et la première couche (106) est inférieure à 20g/m² et supérieure à 3g/m².

6. Écran (100) selon l'une des revendications 1 à 5, **caractérisé en ce que** la densité de colle entre la première couche (106) et la deuxième couche (108) est inférieure à 20g/m² et supérieure à 3g/m².

7. Écran (100) selon l'une des revendications 1 à 6, **caractérisé en ce que** la densité de la première couche (106) est inférieure à 40g/m² et supérieure à 5g/m².

8. Écran (100) selon l'une des revendications 1 à 7, **caractérisé en ce qu'**il comporte une couche de renfort collée sur la couche d'aluminium (102) et **en ce que** la densité de la couche de renfort est comprise entre 10g/m² et 160g/m².

9. Écran (100) selon l'une des revendications 1 à 8, **caractérisé en ce que** la deuxième couche (108) est constituée d'un tissu de verre ou d'une grille de verre, et **en ce que** sa densité est comprise entre 150g/m² et 430g/m².

10. Écran (100) selon l'une des revendications 1 à 9, **caractérisé en ce que** la colle contient un produit retardateur de flamme.
